# EUROPÄISCHE PATENTSCHRIFT

(11) **EP 3 587 027 B1**
(45) Veröffentlichungstag und Bekanntmachung des Hinweises auf die Patenterteilung: **15.03.2023**
(21) Anmeldenummer: 19178896.7
(22) Anmeldetag: 07.06.2019
(51) Int. Cl.: B23P 19/00, B21J 15/32

(54) **KOMPAKTVEREINZELER**
COMPACT SEPARATOR
DISPOSITIF DE SÉPARATION COMPACT

(30) Priorität: 27.06.2018 DE 102018210474
(43) Veröffentlichungstag der Anmeldung: 01.01.2020
(73) Patentinhaber: Audi AG, 85045 Ingolstadt (DE)
(72) Erfinder: Hornbostel, Norbert, 74388 Talheim (DE); Ebinger, Hannes, 74189 Weinsberg (DE)

(56) Entgegenhaltungen:
- DE-A1- 10 335 085
- DE-A1-102008 058 946
- DE-A1-102016 124 694
- JP-A- H0 825 156
- JP-A- H05 253 761
- JP-A- 2016 055 388
- US-B2- 8 850 685

## Beschreibung

Die Erfindung betrifft eine an einem Fügeroboter angeordnete Vorrichtung zur Bevorratung und Vereinzelung von Fügeelementen gemäß dem Oberbegriff des Anspruchs 1. Eine solche Vorrichtung ist aus der DE 10 2016 124694 A1 bekannt.

Aktuell sind industrielle Fügesysteme bekannt, bei denen geordnete, d. h. nacheinander oder übereinander aufgereihte Fügeelemente über eine Kupplung zwischen einer Betankungsstation und der verarbeitenden Fügezange ausgetauscht werden. Bei dieser Art der Übergabe muss eine sehr genaue Verbindung zwischen Betankungsstation und Fügezange geschaffen werden. Hierzu werden häufig Zuführschläuche eingesetzt, die im Hinblick auf Toleranzen schwierig zu fertigen sind (Profilschläuche) und eine Herausforderung für jede Serienfertigung darstellen. Die Transportstrecke der Fügeelemente muss häufig auf <20m begrenzt werden, weil eine geeignete Drucklufteinstellung nicht mehr möglich ist. Weiterhin wird heute sehr viel Druckluftenergie benötigt. Häufig werden Luftleckagen durch komplexe Übergänge an den Profilschlauch-Geometrien beobachtet.

Es wurde bereits ein System vorgeschlagen, in dem die Übergabe der Fügeelemente mit einer einfachen, z. B. trichterförmigen Übergabe erfolgen kann. Der Betankungsvorgang kann hierbei deutlich schneller vorgenommen werden, weil ungeordnete Fügeelemente in größerer Anzahl an der Schnittstelle übergeben werden. Für die Automatisierung können Füllstände und Fehlerquellen (wie z. B. Verstopfungen) durch Sensoren mit der Anlagensteuerung abgefragt werden. Es ergibt sich weiterhin der Vorteil, dass sehr einfach zu fertigende Zuführschläuche, z. B. handelsübliche Rundschläuche verwendet werden können.

Die Fügeelemente, die in einem Zwischenbunker ungeordnet vorliegen, werden in einer automatisierten Roboterfertigung einer Vorrichtung zur Bevorratung und Vereinzelung der Fügeelemente an einem beweglichen Roboter oder einer beweglichen Fügezange übergeben. Hierbei werden die Fügeelemente von einer Befüllstation außerhalb des Schutzkreises ungeordnet in den Schutzkreis, nahe des Roboters in einen Zwischenbunker transportiert oder direkt von der Befüllstation außerhalb des Schutzkreises in die Vorrichtung zur Bevorratung und Vereinzelung am Roboter bzw. der Fügezange zugeführt.

Vereinzelungsmodule für die Verarbeitung von Stanznieten, Schrauben und jeglicher Art von Sonderfügeelementen haben das Ziel, die Fügeelemente aus einem losen Schüttgut in eine geordnete Position zu bringen und dann zur Verarbeitung in die Fügezange zu vereinzeln. In der Regel werden diese Vereinzelungsmodule stationär betrieben. Als Vereinzelungseinrichtung werden Systeme eingesetzt, die Fügeelemente, insbesondere Stanzniete, ausrichten und vereinzeln können. Dies sind z. B. Zentrifugalvereinzeler oder Trommelvereinzeler, Linear-, Schwing-, Stufen- oder Wendelförderer mit gesteuerter Positionsüberwachung.

Aus der DE 69 834 760 T2 ist ein mobiles Versorgungssystem für die Lieferung von Elementen an einen oder mehrere Anwender bekannt. Das System umfasst eine Beförderungsvorrichtung (oder Zufuhrvorrichtung), die die Elemente von einer gespeicherten Menge der Elemente an eine Sortiervorrichtung liefert, die nur einen Durchgang von Elementen mit einer vorbestimmten Position zulässt, und eine Transportvorrichtung, die die hinsichtlich der Position korrekt sortierten Elemente an den Anwender transportiert.

Die Beförderungsvorrichtung bildet einen Teil eines Grundmoduls und es ist eine Vielzahl auswechselbarer Module vorgesehen, von denen jedes eine Sortiervorrichtung und eine zugeordnete Transportvorrichtung umfasst. Dabei ist die Vielzahl auswechselbarer Module mit dem Grundmodul so verbindbar, dass die Sortiervorrichtungen Seite an Seite aneinander angeordnet und so positioniert sind, um Elemente von der Beförderungsvorrichtung aufzunehmen.

Die EP 1 079 952 B1 offenbart ein Verfahren zur Übergabe von Befestigungselementen an Stanzköpfe in einer Presse zum Einpressen der Befestigungselemente in plattenförmige Werkstücke und eine entsprechende Vorrichtung. Die Befestigungselemente werden von einem Fördergerät bzw. Sortier- und Fördergerät in ein Werkzeugunterteil oder -oberteil der Presse gefördert und ggf. nach Übergabe an das jeweils andere Werkzeugteil in eine modular aufgebaute Verteilerstation gefördert, welche die Befestigungselemente den einzelnen Stanzköpfen zuführt.

Wenn Vereinzelungsmodule nach Stand der Technik in einer Roboterzelle eingesetzt werden, ist ein Wechsel im Störungsfall heute zeitaufwendig und die Anlagenverfügbarkeit sinkt. Vor diesem Hintergrund hat sich die Erfindung die Aufgabe gestellt, eine Vorrichtung und ein Verfahren zur Verfügung zu stellen, die im Störungsfall einen schnellen Wechsel eines Vereinzelungsmoduls ermöglichen und eine hohe Anlagenverfügbarkeit sichern.

Die Aufgabe wird erfindungsgemäß gelöst durch eine Vorrichtung mit den Merkmalen des Anspruchs 1 und ein Verfahren mit den Merkmalen des Anspruchs 10. Ausgestaltungen und Weiterbildungen der Erfindung ergeben sich aus den abhängigen Ansprüchen.

Gegenstand der Erfindung ist eine an einem Fügeroboter angeordnete Vorrichtung zur Bevorratung und Vereinzelung von Fügeelementen, umfassend mindestens ein Vereinzelungsmodul mit einem Vorratsbehälter für Fügeelemente und einer Orientierungsvorrichtung für im Vorratsbehälter befindliche Fügeelemente. Das mindestens eine Vereinzelungsmodul ist mit einer an dem Fügeroboter angeordneten Basisplatte über eine Schnellwechsel-Vorrichtung lösbar verbunden. Erfindungsgemäß ist die Vorrichtung schwimmend am Fügeroboter gelagert.

Die Schnellwechsel-Vorrichtung ist dafür eingerichtet, das mindestens eine Vereinzelungsmodul lösbar mit der Basisplatte der Vorrichtung (des "Kompaktvereinzelers") zu verbinden, und zwar in einer Weise, die einen schnellen und einfachen Wechsel des Vereinzelungsmoduls ermöglicht. Beispielsweise kann vorgesehen sein, dass an dem mindestens einen Vereinzelungsmodul angeordnete Stifte in Aussparungen der Basisplatte einrasten, oder dass das mindestens eine Vereinzelungsmodul über ein Nut- und-Feder-System an der Basisplatte fixiert wird. In einer vorteilhaften Ausführungsform der Vorrichtung umfasst die Schnellwechsel-Vorrichtung ein Schienen- und/oder Klemmsystem. In einer weiteren bevorzugten Ausführungsform umfasst die Schnellwechsel-Vorrichtung Aufhängelemente an dem mindestens einen Vereinzelungsmodul und Aufhängelemente an der Basisplatte, wobei die Aufhängelemente an dem mindestens einen Vereinzelungsmodul dafür eingerichtet sind, in die Aufhängelemente der Basisplatte einzugreifen und mit einem Sicherungsbolzen arretiert zu werden. In einer speziellen vorteilhaften Ausführungsform ist das mindestens eine Vereinzelungsmodul über eine Schwalbenschwanzplatte und eine Zentralschraube mit der Basisplatte verbunden. Die Schnellwechsel-Vorrichtung bietet den Vorteil, dass die kompakten Vereinzelungsmodule in Sekundenschnelle getauscht werden können.

Erfindungsgemäß ist die Vorrichtung schwimmend am Fügeroboter gelagert. Der Kompaktvereinzeler kann so seine Position halten, obwohl sich die Position des Fügeroboters verändert. In einer bevorzugten Ausführungsform ist die Basisplatte schwimmend gelagert. Das bedeutet, dass sich die Basisplatte dreht, wenn der Fügeroboter seine Position verändert. In einer anderen bevorzugten Ausführungsform ist die Schnellwechselvorrichtung schwimmend auf der Basisplatte gelagert. Wenn der Fügeroboter seine Position verändert, dreht sich die Schnellwechselvorrichtung, so dass der Kompaktvereinzeler eine weitgehend waagrechte Position beibehält.

Die erfindungsgemäße Vorrichtung ("Kompaktvereinzeler") zur Bevorratung und Vereinzelung von Fügeelementen, insbesondere Halbhohlstanznieten, ist am Fügeroboter montiert. Das hat den Vorteil, dass kurze Zuführschläuche eingesetzt werden können, die die Roboterbewegung über alle Achsen nicht mitmachen müssen. Diese können dann wesentlich kürzer sein als die bei stationären Einheiten erforderlichen 20 m, und beispielsweise eine Länge von weniger als 10 m, insbesondere weniger als 5 m aufweisen. In einer Ausführungsform beträgt die Länge des Zuführschlauchs maximal 3 m, beispielsweise 2 bis 3 m. Es spart Zuführzeit und Druckluftenergie, weil das Fügeelement nur noch einen kurzen Weg zum Verbauort hat und es spart Wartungskosten, weil der Zuführschlauch ein Verschleißteil ist und somit der Aufwand zum Wechseln reduziert werden kann.

Der erfindungsgemäße Kompaktvereinzeler könnte aber auch als getrennt vom Fügeroboter angeordnete stationäre Einheit betrieben werden. In diesem Fall wäre natürlich ein längerer Zuführschlauch zur Fügezange des Fügeroboters erforderlich.

In einer bevorzugten Ausführungsform der Vorrichtung ist der Ausgang der Orientierungseinheit des mindestens einen Vereinzelungsmoduls mit einer Pufferstrecke verbunden, in der die orientierten Fügeelemente hintereinander aufgereiht werden. Die Vorrichtung weist in dieser Ausführungsform eine an die Pufferstrecke angeschlossene Ausgabevorrichtung auf, welche dafür eingerichtet ist, die in der Pufferstrecke hintereinander aufgereihten Fügeelemente einzeln über einen Zuführschlauch einem Fügewerkzeug des Fügeroboters zuzuführen.

In einer vorteilhaften Ausführungsform der Vorrichtung beschreibt die Pufferstrecke zwischen dem Ausgang des Vereinzelungsmoduls und dem Eingang der Ausgabeeinheit einen Bogen von 90°. In dieser Ausführungsform wird die Nietzuführung vom Kompaktvereinzeler zur Ausgabeeinheit bzw. dann dem Schlauchabgang über einen 90° (Winkel-) Bogen realisiert, so dass dadurch einfach der Schlauchabgang ohne komplexe konstruktive Verbindungen und Verformungen an der Ausgabeeinheit montiert werden kann, da eine passende Umlenkung der zugeführten Niete durch den Bogen selbst erfolgt. Ferner befindet sich der Kompaktvereinzeler am Roboter in einer gut befüllbaren Position (Ausrichtung nach oben). Damit werden die Nachteile der aus dem Stand der Technik bekannten linearen Zuführung, wie bspw. schlechte Befüllbarkeit der Pufferstrecke im Bereich Ausgabeeinheit der linearen Anordnung, gelöst. Durch die Anordnung der Pufferstrecke im 90°-Bogen kann die Pufferung platzsparender erfolgen als bei den bisher bekannten Pufferstrecken. Zudem kann über den 90°-Bogen ein günstiger Abgang des Zuführschlauchs zur Fügezange realisiert werden, weil der Schlauchanschluss damit in Richtung der Roboterachse geleitet werden kann.

In einer bevorzugten Ausführungsform der Vorrichtung steht die Ausgabevorrichtung mit einem Zuführschlauch in Verbindung, über den Fügeelemente zu einem Fügewerkzeug des Fügeroboters transportiert werden. Der Schlauchanschluss kann dabei nach links oder nach rechts führen. Theoretisch könnten auch zwei Schlauchanschlüsse, also rechts und links ausgeführt werden. Diese Ausführungsform kommt zum Einsatz, wenn zwei unterschiedliche Fügezangen bedient werden. Das könnte der Fall sein, wenn zwei Fügezangen am Roboter gedockt werden. In dieser Ausführungsform muss die Schussluft dann an einer anderen Stelle eingespeist werden, z. B. am Deckel der Nietgasse.

In einer bevorzugten Ausführungsform der Vorrichtung weist die Ausgabeeinheit einen Adapter für den Anschluss unterschiedlicher Zuführschläuche und einen Adapter für den Anschluss von Druckluft auf, wobei die Adapter jeweils auswechselbar sind und ihre Positionen an der Ausgabeeinheit gegeneinander getauscht werden können. Aktuell hat jeder Anbieter seine selbst entwickelte Lösung für den Schlauchanschluss. Dabei variiert sowohl die Geometrie als auch die Art und Weise der Fixierung des Schlauchs. Die Systeme sind nicht ohne Weiteres austauschbar und der Anschluss des Schlauchadapters ist in der Regel in eine bestimmte Richtung vorgegeben Der erfindungsgemäße Schlauchadapter ermöglicht es, Schlauchabgänge für Fügezangen unterschiedlicher Hersteller anzuschließen. Die Abgänge können je nach Hersteller unterschiedliche Abmessungen aufweisen. Der Schlauchabgang an der Ausgabeeinheit wird außerdem angepasst, indem die Luftzuführeinheit und der Schlauchabgang wechselbar sind, d. h. die Adapter können zwischen linker und rechter Seite gewechselt werden. Die Schusslufteinspeisung kann variabel von der rechten oder linken Seite erfolgen. Dadurch kann die Ausgabeeinheit bzw. der Kompaktvereinzeler an beliebiger Position am Roboter oder im Montagebereich montiert werden, da der Schlauchabgang jeweils passend positioniert werden kann. Die Montage der Adapter kann beispielsweise so erfolgen, dass die unterschiedlichen Adapter an das Gehäuse der Nietgasse der Ausgabeeinheit geschraubt und verstiftet werden.

Das Vereinzelungsmodul der erfindungsgemäßen Vorrichtung umfasst eine Orientierungsvorrichtung für im Vorratsbehälter befindliche Fügeelemente. Als Orientierungsvorrichtungen können beispielsweise Trommelvereinzeler oder Linearförderer eingesetzt werden.

In einer bevorzugten Ausführungsform der Vorrichtung ist die Vereinzelungsvorrichtung ein Trommelvereinzeler. Um die Fügeelemente von einem ungeordneten Zustand in einen geordneten Zustand zu bringen, haben sich besonders sogenannte Trommelvereinzeler als vorteilhaft erwiesen. Dabei wird die Trommel dazu benutzt, die Fügeelemente in Bewegung zu bringen und an einer Austrittstrecke aufreihen zu können. Zur Drehung der Trommel wird ein beliebiger Antrieb verwendet, meistens aber ein elektrischer Antriebsmotor.

In einer vorteilhaften Ausführungsform umfasst die erfindungsgemäße Vorrichtung mindestens zwei Vereinzelungsmodule. Damit können parallel mehrere unterschiedliche Fügeelemente an einem Abgang zur Fügezange gekoppelt werden. Es lassen sich so unterschiedliche Arten von Fügeelementen in einer einzigen Vorrichtung verarbeiten, beispielsweise Niete unterschiedlicher Geometrien, z. B. unterschiedlicher Längen von z. B. 2,5 bis 14 mm, beispielsweise 3,5 bis 8 mm.

Um Vereinzelungsmodule zur Verarbeitung von Fügeelementen, insbesondere Halbhohlstanzniete am Roboter einsetzen zu können, ist der Bedarf an Bauraum möglichst niedrig zu halten.

Die erfindungsgemäße Vorrichtung zeichnet sich durch ihre kompakte Bauweise aus, die eine Montage an einem Fügeroboter ermöglicht. In einer bevorzugten Ausführungsform beträgt die Breite der Vorrichtung maximal 320 mm; ihre Höhe beträgt vorzugsweise maximal 480 mm; und ihre Tiefe maximal 230 mm. In einer vorteilhaften Ausführungsform beträgt das Gewicht der Vorrichtung weniger als 16 kg, z. B. weniger als 14 kg in befülltem Zustand. In einer anderen vorteilhaften Ausführungsform, welche zwei Vereinzelungsmodule aufweist, beträgt das Gewicht der Vorrichtung weniger als 32 kg, z. B. weniger als 30 kg in befülltem Zustand. Die maximale Füllmenge des Vorratsbehälters beträgt in einer bevorzugten Ausführungsform von 2.000 bis 10.000 Fügeelemente, abhängig von der Größe der eingesetzten Fügeelemente.

Weitere Vorteile und Ausgestaltungen der Erfindung ergeben sich aus der Beschreibung und den beiliegenden Zeichnungen.

Die Erfindung ist anhand von Ausführungsformen in den Zeichnungen schematisch dargestellt und wird unter Bezugnahme auf die Zeichnungen schematisch und ausführlich beschrieben. Es zeigt:
Figur 1 eine schematische perspektivische Darstellung einer Ausführungsform des erfindungsgemäßen Kompaktvereinzelers;
Figur 2 eine schematische perspektivische Darstellung eines Teils des Kompaktvereinzelers aus Fig. 1;
Figur 3 eine schematische perspektivische Darstellung einer anderen Ausführungsform des erfindungsgemäßen Kompaktvereinzelers.

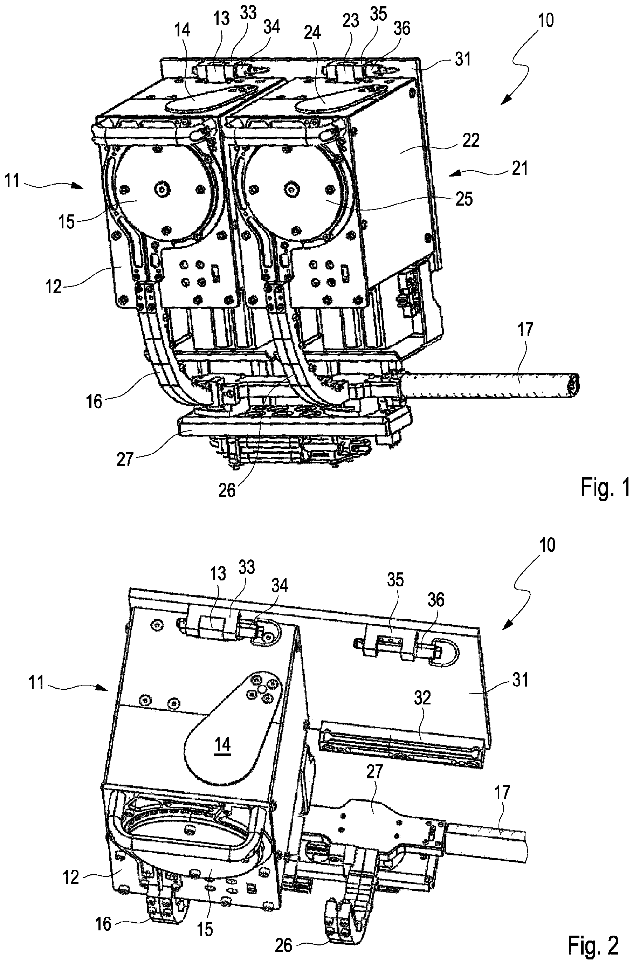

Figur 1 zeigt in perspektivischer Darstellung schematisch eine Ausführungsform des erfindungsgemäßen Kompaktvereinzelers 10 mit zwei Vereinzelungsmodulen 11 und 21. Die Vereinzelungsmodule 11 und 21 sind über an den Vereinzelungsmodulen angeordneten Aufhängungen 13 und 23 und an einer Basisplatte 31 angeordneten Aufhängungen 33 und 35 mit Sicherungsbolzen 34 und 36 an der Basisplatte 31 arretiert. Jedes Vereinzelungsmodul 11 bzw. 21 weist einen Vorratsbehälter 12 bzw. 22 für Fügeelemente auf. Die Einfüllöffnungen der Vorratsbehälter 12 und 22 sind über Klappen 14 bzw. 24 verschlossen und daher in der Zeichnung nicht sichtbar. Die in den Vorratsbehältern 12 bzw. 22 befindlichen Fügeelemente, z. B. Hohlstanzniete, werden über Trommelvereinzeler 15 bzw. 25 sortiert und in einer mit dem jeweiligen Vereinzelungsmodul 11 bzw. 21 verbundenen Pufferstrecke 16 bzw. 26 aufgereiht. Die aufgereihten Fügeelemente werden in der Ausgabeeinheit 27 bei Bedarf vereinzelt und einem Zuführschlauch 17 zugeführt, über den sie mittels Druckluft zu dem Fügewerkzeug des Fügeroboters transportiert werden.

Figur 2 zeigt eine Teilansicht derselben Ausführungsform wie Figur 1, in der das zweite Vereinzelungsmodul 21 entfernt wurde. Dargestellt sind die an der Basisplatte 31 angeordneten Elemente der Schnellwechsel-Vorrichtung des Vereinzelungsmoduls 21. Das Vereinzelungsmodul 21 wird unten durch die Schiene 32 gehalten und oben durch den Sicherungsbolzen 36, der die Aufhängung 35 der Basisplatte 31 mit der Aufhängung 23 des Vereinzelungsmoduls 21 verbindet, arretiert.

Zum Auswechseln des Vereinzelungsmoduls 21 im Falle einer Störung oder eines Defekts werden zunächst die Schraubverbindungen zwischen Pufferstrecke 26 und Vereinzelungsmodul 21 gelöst. Danach wird der Sicherungsbolzen 36 entnommen, der die Basisplatte 31 und das Vereinzelungsmodul 21 oben miteinander verbindet. Danach kann das Vereinzelungsmodul 21 aus der Halteschiene 32 entnommen werden. Ein Ersatzmodul wird in die Halteschiene 32 eingesetzt und anschließend mittels des Sicherungsbolzens 36 an der Basisplatte 31 arretiert. Der Austausch eines Vereinzelungsmoduls lässt sich so innerhalb weniger Sekunden durchführen. Die Anschlüsse der für den Betrieb des Kompaktvereinzelers 10 erforderlichen Medien sind ebenfalls steckbar ausgeführt, um eine komplette Entnahme der Module gewährleisten zu können.

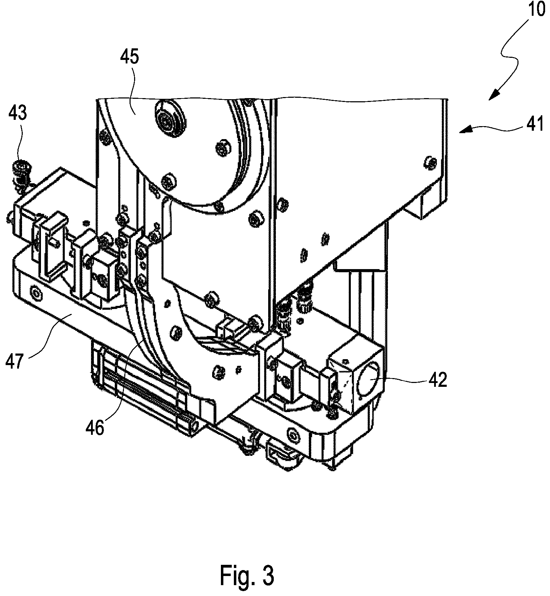

Figur 3 zeigt in perspektivischer Darstellung schematisch einen Teil einer anderen Ausführungsform des erfindungsgemäßen Kompaktvereinzelers 10. Dargestellt ist ein Vereinzelungsmodul 41 mit einem Trommelvereinzeler 45 und einer mit dem Ausgang des Trommelvereinzelers 45 verbundenen Pufferstrecke 46. Die Pufferstrecke 46 ist an eine Ausgabeeinheit 47 angeschlossen. Die in der Pufferstrecke 46 aufgereihten Fügeelemente werden in der Ausgabeeinheit 47 bei Bedarf vereinzelt und einem Zuführschlauch (nicht dargestellt) zugeführt, über den sie mittels Druckluft zu dem Fügewerkzeug des Fügeroboters transportiert werden. An einem Ende der Transportstrecke der Ausgabeeinheit 47 ist ein Schlauchadapter 42 angeordnet, über den der Zuführschlauch mit der Ausgabeeinheit 47 verbunden wird. Am anderen Ende der Transportstrecke der Ausgabeeinheit 47 ist ein Adapter 43 für den Anschluss von Druckluft ("Schussluft") angeordnet, über den die Ausgabeeinheit 47 mit Druckluft für den Transport der Fügeelemente versorgt werden kann.

Der Schlauchadapter 42 ermöglicht es, passende Schlauchabgänge für Fügezangen unterschiedlicher Hersteller an die Ausgabeeinheit 47 anzuschließen. Durch die Verwendung der Adapter 42 und 43 wird die Flexibilität für den Schlauchanschluss zum Roboter erhöht, da sie unterschiedliche Schlauchanschlussvarianten ermöglichen. Weiterhin können die Adapter 42 und 43 zwischen den beiden Enden der Transportstrecke der Ausgabeeinheit 47, in der Figur also zwischen rechter und linker Seite getauscht werden. Die Schusslufteinspeisung kann also variabel von der rechten oder linken Seite erfolgen. Durch die variable Anbindung der Adapter 42 und 43 kann der Kompaktvereinzeler flexibler am Roboter montiert werden. Ohne die wechselbaren Anschlüsse müsste je nach Montage des Systems die Schlauchverlegung eine 180° Drehung bekommen, was zu Prozessunsicherheiten und zu Platzproblemen an der Roboterachse führen kann.

### Bezugszeichenliste

- 10: Kompaktvereinzeler
- 11: Vereinzelungsmodul
- 12: Vorratsbehälter
- 13: Aufhängung
- 14: Klappe
- 15: Trommelvereinzeler
- 16: Pufferstrecke
- 17: Zuführschlauch
- 21: Vereinzelungsmodul
- 22: Vorratsbehälter
- 23: Aufhängung
- 24: Klappe
- 25: Trommelvereinzeler
- 26: Pufferstrecke
- 27: Ausgabeeinheit/Weiche
- 31: Basisplatte
- 32: Schiene
- 33: Aufhängung
- 34: Sicherungsbolzen
- 35: Aufhängung
- 36: Sicherungsbolzen
- 41: Vereinzelungsmodul
- 42: Adapter für unterschiedliche Schlauchanschlüsse
- 43: Adapter für Schussluft
- 45: Trommelvereinzeler
- 46: Pufferstrecke
- 47: Ausgabeeinheit

## Patentansprüche

1. An einem Fügeroboter angeordnete Vorrichtung (10) zur Bevorratung und Vereinzelung von Fügeelementen, umfassend mindestens ein Vereinzelungsmodul (11, 21, 41) mit einem Vorratsbehälter (12, 22) für Fügeelemente und einer Orientierungsvorrichtung (15, 25, 45) für im Vorratsbehälter (12, 22) befindliche Fügeelemente, wobei das mindestens eine Vereinzelungsmodul (11, 21, 45) mit einer an dem Fügeroboter angeordneten Basisplatte (31) über eine Schnellwechsel-Vorrichtung (13, 23, 32, 33, 34, 35, 36) lösbar verbunden ist, **dadurch gekennzeichnet, dass** die Vorrichtung schwimmend am Fügeroboter gelagert ist.

2. Vorrichtung (10) nach Anspruch 1, worin die Schnellwechsel-Vorrichtung (13, 23, 32, 33, 34, 35, 36) ein Schienen- (32) und/oder Klemmsystem umfasst.

3. Vorrichtung (10) nach Anspruch 1 oder 2, worin die Schnellwechsel-Vorrichtung (13, 23, 32, 33, 34, 35, 36) Aufhängelemente (13, 23) an dem mindestens einen Vereinzelungsmodul (11, 21, 41) und Aufhängelemente (33, 35) an der Basisplatte (31) umfasst, die dafür eingerichtet sind, ineinander einzugreifen und mit einem Sicherungsbolzen (34, 36) arretiert zu werden.

4. Vorrichtung (10) nach einem der voranstehenden Ansprüche, worin das mindestens eine Vereinzelungsmodul (11, 21, 41) mit einer Pufferstrecke (16, 26, 46) verbunden ist, in der die orientierten Fügeelemente hintereinander aufgereiht werden; und worin die Vorrichtung (10) eine an die Pufferstrecke (16, 26, 46) angeschlossene Ausgabevorrichtung (27, 47) aufweist, welche dafür eingerichtet ist, die in der Pufferstrecke (16, 26, 46) hintereinander aufgereihten Fügeelemente einzeln über einen Zuführschlauch (17) einem Fügewerkzeug des Fügeroboters zuzuführen.

5. Vorrichtung (10) nach Anspruch 4, worin die Pufferstrecke (16, 26, 46) zwischen dem Ausgang der Orientierungseinheit (15, 25, 45) des Vereinzelungsmoduls (11, 21, 41) und dem Eingang der Ausgabeeinheit (27, 47) einen Bogen von 90° beschreibt.

6. Vorrichtung (10) nach Anspruch 4 oder 5, worin die Ausgabeeinheit (27, 47) einen Adapter (42) für den Anschluss unterschiedlicher Zuführschläuche (17) und einen Adapter (43) für den Anschluss von Druckluft aufweist, wobei die Adapter (42, 43) jeweils auswechselbar sind und ihre Positionen an der Ausgabeeinheit (27, 47) gegeneinander getauscht werden können.

7. Vorrichtung (10) nach einem der voranstehenden Ansprüche, worin die Orientierungsvorrichtung (15, 25, 34) ein Trommelvereinzeler (15, 25, 34) ist.

8. Vorrichtung (10) nach einem der voranstehenden Ansprüche, welche mindestens zwei Vereinzelungsmodule (11, 21, 41) umfasst.

9. Vorrichtung (10) nach einem der voranstehenden Ansprüche, worin die Basisplatte (31) schwimmend am Fügeroboter gelagert ist.

10. Vorrichtung nach einem der voranstehenden Ansprüche, worin die Schnellwechsel-Vorrichtung (13, 23, 32, 33, 34, 35, 36) schwimmend auf der Basisplatte (31) gelagert ist.

## Claims

1. Device (10) arranged on a joining robot for storing and separating joining elements, the device comprising at least one separating module (11, 21, 41) having a storage container (12, 22) for joining elements and an orientation device (15, 25, 45) for joining elements located in the storage container (12, 22), wherein the at least one separating module (11, 21, 45) is detachably connected to a base plate (31) arranged on the joining robot by means of a quick-change device (13, 23, 32, 33, 34, 35, 36), **characterised in that** the device is mounted in a floating manner on the joining robot.

2. Device (10) according to claim 1, wherein the quick-change device (13, 23, 32, 33, 34, 35, 36) comprises a rail system (32) and/or clamping system.

3. Device (10) according to claim 1 or 2, wherein the quick-change device (13, 23, 32, 33, 34, 35, 36) comprises suspension elements (13, 23) on the at least one separating module (11, 21, 41) and suspension elements (33, 35) on the base plate (31), which are designed to engage with each other and to be locked with a securing pin (34, 36).

4. Device (10) according to any of the preceding claims, wherein the at least one separating module (11, 21, 41) is connected to a buffer section (16, 26, 46) in which the oriented joining elements are lined up one behind the other; and wherein the device (10) has a dispensing device (27, 47) which is connected to the buffer section (16, 26, 46) and which is designed to feed the joining elements lined up one behind the other in the buffer section (16, 26, 46) individually via a feed hose (17) to a joining tool of the joining robot.

5. Device (10) according to claim 4, wherein the buffer section (16, 26, 46) between the outlet of the orientation unit (15, 25, 45) of the separating module (11, 21, 41) and the inlet of the dispensing unit (27, 47) describes a 90° arc.

6. Device (10) according to claim 4 or 5, wherein the dispensing unit (27, 47) has an adapter (42) for connecting different feed hoses (17) and an adapter (43) for connecting compressed air, wherein the adapters (42, 43) are each interchangeable and their positions on the dispensing unit (27, 47) can be interchanged.

7. Device (10) according to any of the preceding claims, wherein the orientation device (15, 25, 34) is a drum separator (15, 25, 34).

8. Device (10) according to any of the preceding claims, which comprises at least two separating modules (11, 21, 41).

9. Device (10) according to any of the preceding claims, wherein the base plate (31) is mounted in a floating manner on the joining robot.

10. Device according to any of the preceding claims, wherein the quick-change device (13, 23, 32, 33, 34, 35, 36) is mounted in a floating manner on the base plate (31).

## Revendications

1. Dispositif (10) agencé au niveau d'un robot d'assemblage pour le stockage et la séparation d'éléments d'assemblage, comprenant au moins un module de séparation (11, 21, 41) avec un réservoir (12, 22) pour des éléments d'assemblage et un dispositif d'orientation (15, 25, 45) pour des éléments d'assemblage se trouvant dans le réservoir (12, 22), dans lequel le au moins un module de séparation (11, 21, 45) est relié de manière détachable à une plaque de base (31) agencée au niveau du robot d'assemblage via un dispositif de changement rapide (13, 23, 32, 33, 34, 35, 36), **caractérisé en ce que** le dispositif est monté de manière flottante au niveau du robot d'assemblage.

2. Dispositif (10) selon la revendication 1, dans lequel le dispositif de changement rapide (13, 23, 32, 33, 34, 35, 36) comprend un système de rail (32) et/ou de serrage.

3. Dispositif (10) selon la revendication 1 ou 2, dans lequel le dispositif de changement rapide (13, 23, 32, 33, 34, 35, 36) comprend des éléments de suspension (13, 23) au niveau du au moins un module de séparation (11, 21, 41) et des éléments de suspension (33, 35) au niveau de la plaque de base (31), qui sont configurés pour venir en prise mutuellement et être verrouillés avec un boulon de fixation (34, 36).

4. Dispositif (10) selon l'une quelconque des revendications précédentes, dans lequel le au moins un module de séparation (11, 21, 41) est relié à une section tampon (16, 26, 46) dans laquelle les éléments d'assemblage orientés sont alignés les uns après les autres ; et dans lequel le dispositif (10) présente un dispositif de sortie (27, 47) connecté à la section tampon (16, 26, 46), qui est configuré pour fournir individuellement les éléments d'assemblage alignés les uns derrière les autres dans la section tampon (16, 26, 46) via un tuyau d'alimentation (17) à un outil d'assemblage du robot d'assemblage.

5. Dispositif (10) selon la revendication 4, dans lequel la section tampon (16, 26, 46) décrit un arc de 90° entre la sortie de l'unité d'orientation (15, 25, 45) du module de séparation (11, 21, 41) et l'entrée de l'unité de sortie (27, 47).

6. Dispositif (10) selon la revendication 4 ou 5, dans lequel l'unité de sortie (27, 47) présente un adaptateur (42) pour connecter différents tuyaux d'alimentation (17) et un adaptateur (43) pour connecter de l'air comprimé, dans lequel les adaptateurs (42, 43) sont respectivement interchangeables et leurs positions sur l'unité de sortie (27, 47) peuvent être échangées l'une pour l'autre.

7. Dispositif (10) selon l'une quelconque des revendications précédentes, dans lequel le dispositif d'orientation (15, 25, 34) est un dispositif de séparation à tambour (15, 25, 34).

8. Dispositif (10) selon l'une quelconque des revendications précédentes, qui comprend au moins deux modules de séparation (11, 21, 41).

9. Dispositif (10) selon l'une quelconque des revendications précédentes, dans lequel la plaque de base (31) est montée de manière flottante sur le robot d'assemblage.

10. Dispositif selon l'une quelconque des revendications précédentes, dans lequel le dispositif de changement rapide (13, 23, 32, 33, 34, 35, 36) est monté de manière flottante sur la plaque de base (31).
